# EUROPEAN PATENT APPLICATION

(11) **EP 1 727 097 A1**
(43) Date of publication of application: **29.11.2006**
(21) Application number: 05290995.9
(22) Date of filing: 09.05.2005
(51) Int. Cl.: G07F 7/10

(54) **Method, system, terminal and chip card for managing security counter**

(71) Applicant: GEMPLUS, 13420 Gémenos (FR)
(72) Inventor: Nguyen, Khanh Quoc, 120320 Singapore (SG); Vong, Robert, 229019 Singapore (SG)

(57) **Abstract**

A method for managing a security counter in a chip card is disclosed. The method includes checking the value of a security counter, determining if the value of the security counter has reached or exceeded one of at least two predetermined threshold values, and performing an action associated with each of the predetermined threshold values if it is determined that the predetermined threshold value of the security counter has been reached or exceeded. A system including a chip card, a terminal and a server for implementing the method is also disclosed.

## Description

This invention relates to a method, system, terminal and chip card for managing a security counter in a chip card, and more particularly, to a method, system, terminal and chip card for managing a security counter to allow a remedial action to be performed, if necessary, to prevent the chip card from being blocked.

Existing chip cards, also known as smart cards, used in the telecommunications, banking and identification industries are protected using a number of security counters implemented in an integrated circuit (IC) device of each chip card. These security counters include personal identification number (PIN) counters, authentication counters, counters for storing the number of accesses to a file or a number of accesses to a non-volatile memory location, and other similar counters. During use, the value of each security counter is incremented when it is determined that there is an occurrence of any suspicious or failed activity. Such an activity includes, but is not limited to, a suspected attack on the IC device of the chip card, entry of an incorrect PIN and failed authentication attempt etc. Typically, when the value of the security counter reaches a predetermined threshold value, the chip card is completely blocked (also known as permanently disabled or killed) to prevent further security breaches that may eventually compromise the security in the telecommunication, banking, or identification services. When the chip card is blocked, the user is no longer able to use the chip card. There is nothing the user can do to unblock or recover usage of the chip card. Such a practice is disclosed in U.S. Patent No. 4,439,670, Basset et al., entitled "Method and Device for the Checking of the Number of Access Attempts to an Electronic Store, Notably that of An Integrated Circuit of an Object such as a Credit Card or a Buyer's Card" and WO 99/03074, Jean et al., entitled "Method for Managing a Secure Terminal."

Moreover, with the increase in security checks introduced in some chip cards, the potential for a security counter to be updated is getting higher. And with software in chip cards getting larger in size and becoming more complex, it is also likely that a security counter may be inadvertently updated due to bugs in the software that result in counter mis-management. The security counter may also be inadvertently updated due to a physical failure of the IC device. Physical failure of an IC device is identified when data read from a memory location does not correspond to data written thereto, or when the sequence of data processing or execution of a predetermined section of software does not correspond with that anticipated. Under such circumstances, the current implementation of blocking the card without any prior warning or without allowing the service provider to perform a remedial action may be inappropriate. The unwarranted blocking of the card usually leaves the users high and dry without access to any service, and is thus unsatisfactory and unacceptable to some card users. This would most likely not bode well for the satisfaction and confidence the users might have in the service provider. There is thus a need for a method for managing a security counter in a chip card wherein remedial action may be taken, if necessary, before the chip card is blocked.

The invention may be implemented as a generic chip card system that includes at least a chip card, at least one terminal that is able to communicate with the chip card, and a server that is linked to the terminal. The chip card or the terminal is able to check the value of a security counter in the chip card to determine if the value of the security counter has reached or exceeded one of at least two predetermined threshold values. The chip card or the terminal is able to perform an action associated with each of the predetermined threshold values if it is determined that the predetermined threshold value of the security counter has been reached or exceeded.

Accordingly, the invention may be implemented as a chip card having a security counter therein. The chip card includes means for checking the value of the security counter, means for determining if the value of the security counter has reached or exceeded one of at least two predetermined threshold values, and means for performing an action associated with each of the predetermined threshold values if it is determined that the predetermined threshold value of the security counter has been reached or exceeded.

Similarly, the invention may be implemented as a terminal for communicating with a chip card having a security counter therein. The terminal includes means for receiving the value of the security counter from the chip card, means for determining if the value of the security counter has reached or exceeded one of at least two predetermined threshold values, and means for performing an action associated with each of the predetermined values if it is determined that the predetermined threshold value of the security counter has been reached or exceeded.

The security counter includes a personal identification number (PIN) counter, an authentication counter, a counter for storing the number of accesses to a file or a number of accesses to a non-volatile memory location, and other like counters. A security counter may be dedicated to a particular application in the chip card or it may be shared by a number of applications in the chip card. Such association information is defined in a security policy that is stored in the system. There may be more than two threshold values set for the security counter. The number of threshold values set for the security counter depends on the granularity at which the value of the security counter is to be managed. The value of the security counter represents the severity or criticality of a "breach" in security related to the security counter.

In one embodiment, the chip card system may be a mobile communication system, such as a GSM (second generation (2G)) system, a General Radio Packet Service (GPRS) (second and a half generation (2.5G)) system, a Universal Mobile Telecommunications System (UMTS) (third generation (3G)) system or the like. In such a case, the terminal is a mobile equipment such as a mobile phone, a personal digital assistant (PDA), a computing device equipped with a PC wireless card or a GPRS wireless card. The chip card is a subscriber identity module (SIM) in a GSM system. In another embodiment, the chip card system may be a banking or identification system. In such a case, the terminal may be a card reader and the chip card may be a credit card sized banking or identification card.

According to another implementation of the invention, there is provided a method for managing a security counter in a chip card in the system described above. Accordingly, the method includes checking the value of a security counter and determining if the value of the security counter has reached or exceeded one of at least two predetermined threshold values. The method further includes performing an action associated with each of the predetermined threshold values if it is determined that the predetermined threshold value of the security counter has been reached or exceeded. When compared with the prior art wherein only a single first predetermined threshold value is used, the method further includes determining if the value of the security counter has reached or exceeded at least one additional predetermined threshold value that is different from the first predetermined threshold value. When it is determined one such additional predetermined threshold value is reached, the method further includes performing an action associated with that additional predetermined threshold.

In one embodiment, there may be two or more predetermined threshold values associated with the security counter. When each predetermined threshold value of the counter is reached or exceeded, applications associated therewith are blocked or locked. In this manner, applications requiring higher levels of security are associated with lower predetermined threshold values. Conversely, applications requiring lower levels of security are associated with higher predetermined threshold values. The applications requiring higher levels of security are thus blocked earlier than those requiring lower levels of security. When the highest predetermined threshold value is reached, the chip card or more specifically all applications therein are blocked. In this manner, associating applications with at least two predetermined threshold values of a security counter allows a gradual blocking of applications, from blocking applications requiring a higher level of security first and then subsequently blocking applications requiring lower levels of security.

In another embodiment, there may be only two predetermined threshold values, a first threshold value and a second threshold value representing a lower and a higher severity or criticality level respectively. In such a case, the actions associated with the first threshold value and the second threshold value include providing an alert message and blocking further use of the chip card respectively. For the system described above, providing an alert message includes either the terminal or the chip card sending an alert message to the server associated with the chip card. The alert message is referred to as a pro-active alert message or warning when sent by the chip card. The alert message is referred to as a submissive alert message or warning when sent by the terminal. The chip card or the terminal may send the alert message automatically, without the need for any instruction from the server for doing so. Alternatively, the chip card or the terminal may send the alert message to the server only when prompted to do so by the server so as to reduce message traffic at the server. In the GSM telecommunications system, either the SIM or the mobile terminal may send the alert message to the server. In the banking or identification system, typically only the terminal is able to send the alert message to the server.

The alert messages may be sent only once when the predetermined threshold value is reached. Alternatively, an alert message may be sent each time the security counter value is determined to have exceeded the predetermined threshold value after it has been reached. The information contained in each alert message may include the value of the security counter, the chip card identity and a timestamp indicating the time when the security counter is last updated. This timestamp may be the time that is maintained in the mobile equipment, which may not be the real time, or the real time maintained at a banking or identification terminal. Where necessary, other information relating to the location of the mobile station or transaction location may also be included in an alert message. The alert messages allow the server to determine from the information contained therein or information that are further obtained from the terminal and/or the chip card to determine if any remedial action should be performed. The server may also use alert messages from other chip cards for deciding if any remedial action is necessary. For example, the server may determine if there is a pattern in the alert messages received for one chip card or the alert messages received for chip cards belonging to a particular batch of chip cards or chip cards being used in a particular location or area. The server may additionally or alternatively obtain information from other chip cards from which no alert messages have been received. The server uses the information for detecting an attack or failure pattern. Examples of remedial actions that may be taken by the server include remotely blocking, locking, resetting one or more affected cards and changing the security policies associated therewith. Changing a security policy may include adjusting one or more of the first threshold value, the second threshold value and the value of the security counter. The server may send an instruction to either the terminal or to the chip card to effect a remedial action. The alert message and/or the instruction from the server are preferably sent over a secure channel between the terminal and the server.

In one embodiment, if alert messages are received from cards being used with a particular terminal, it may be the case that the terminal is hostile (from which fault attacks are launched) or a genuine terminal failure. In such a case, a service person may be sent to check if the terminal is faulty. If it is determined that the terminal is not faulty and probably hostile, the server may take any remedial action described above. If it is determined that the terminal is faulty, the remedial action taken by the server may be to reset or clear the security counters in the affected cards.

In another embodiment, the threshold values for an authentication security counter may be set, for example, to 10,000; 50,000 and 100,000 when it is determined that it takes more than 100,000 attempts to break an authentication algorithm. The lower threshold values of 10,000 and 50,000 could be used as safeguards against improvements in breaking of the authentication algorithm which require less attempts.

Advantageously, the system and method described above allow a service provider to be forewarned of impending card and thus service failure, and thus gives the service provider the opportunity to determine if indeed there is any problem and where necessary to pre-empt the card failures. If it is determined that there are malicious attacks on a card, the service provider may immediately block the card instead of waiting for the value of the security counter in the card to be incremented to a value that results in automatic blocking of the card. The latter approach provides the attacker further opportunities for a successful attack and is preferably avoided. The system and method also allow the service provider to remotely and transparently manage a security policy without any inconvenience to the card users.

Other aspects and advantages of the invention will become apparent from the following detailed description, taken in conjunction with the accompanying drawings, illustrating by way of example the principles of the invention.

The invention will be better understood with reference to the drawings, in which:
Figure 1 is a schematic drawing of a GSM mobile communications network that includes a security counter management system according to one embodiment of the invention;
Figure 2 is a ladder diagram showing the flow of messages between a server, SIM and mobile equipment of the management system in Figure 1;
Figure 3 a schematic drawing of a banking system that includes a security counter management system according to another embodiment of the invention;
Figure 4 is a ladder diagram showing the flow of messages between a banking card, a card reader and a server of the management system in Figure 3; and
Figure 5 is a flowchart of a sequence of steps for managing a security counter in a chip card according to yet another embodiment of the invention.

As shown in the drawings for purposes of illustration, the invention is embodied in a novel system and method for managing a security counter in a chip card. Existing solutions give no prior warning and do not allow any remedial action to be taken before the card is blocked when the value of a security counter therein has reached a single predetermined threshold value.

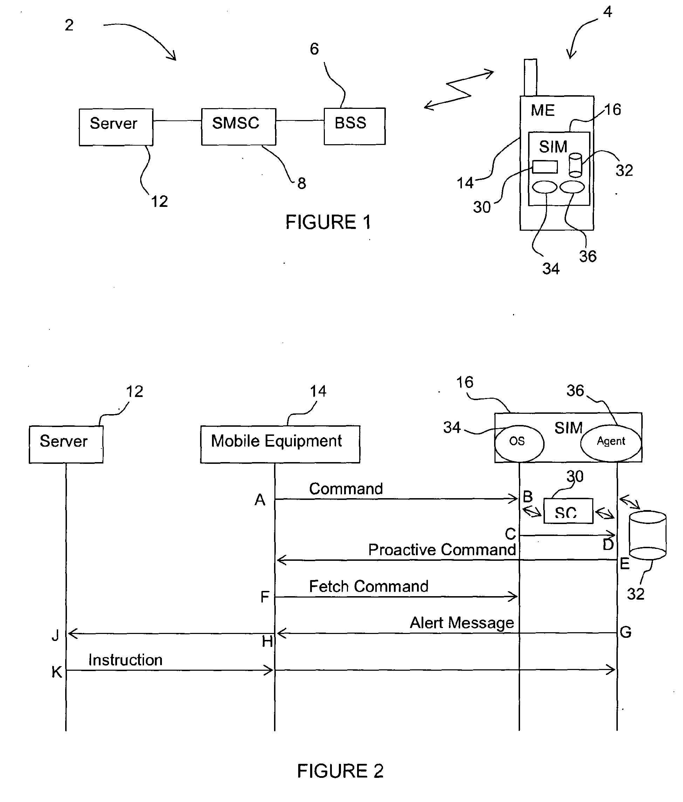

Figure 1 shows a simplified GSM (Global System for Mobile communications) telecommunications network 2. The principle components of the GSM network 2, for the purposes of illustrating an embodiment of the invention, include a mobile station (MS) 4, a base station system (BSS) 6, and a short message service center (SMSC) 8. The mobile station (MS) 4 includes, but is not limited to, a mobile phone. The base station system 6 provides radio inter-connection from the mobile station 4 to a network switching system (not shown).

The GSM communication network 2 also includes a security counter management system. This system includes the mobile station 4 and a backend server 12 connected to the SMSC 8 either via a local area network (LAN), a wide area network (WAN), or a virtual private network (VPN). The SMSC 8 delivers short message service (SMS) messages to the mobile station 4 and the backend server 12.

The mobile station 4 includes a mobile terminal or equipment (ME) 14 and an electronic "smart card" or chip card, which is known as a subscriber identity module (SIM) 16 when used in a GSM network. The mobile equipment 14 includes a processor (not shown) and its associated memory (not shown). The SIM 16 includes, amongst others, a SIM processor (not shown) and a SIM memory (not shown). The SIM 16 is used for the storage and retrieval of data items by the mobile equipment processor. The data items in the SIM 16 include one or more security counters 30 and a security policy 32 associated therewith. The security policy 32 specifies the threshold values, one or more applications associated with each of these threshold values and actions to be performed when each of these threshold values is reached or exceeded. The command set, data file structure and data coding used for data communicated via the interface between the mobile equipment processor and the SIM processor, or simply between the mobile equipment 14 and the SIM 16, are specified in the 3GPP technical specification 11.11 or the ETSI Technical Specification 100.977.

An operating system 34, a management agent 36 and mobile applications (not shown) are resident on the SIM 16 and they allow interactions between the SIM 16 and the mobile equipment 14. The applications may be supported by the SIM application toolkit or a similar platform. An example of a mobile application is a mobile payment application. This mobile payment application may involve the use of one or more security counters 30 in the SIM memory. Hereafter, for ease of description, the embodiment of the invention will be described based mainly on a single application that uses only a single authentication security counter. Those skilled in the art should however understand that the relationship between the applications and the security counters may be a one-to-one, many-to-one, one-to-many or many-to-many relationship specifiable in the security policy 32. In the embodiment, it is specified in the security policy 32 that there are two predetermined threshold values associated with the authentication security counter. These two threshold values include a first threshold value and a second threshold value, wherein the first threshold value is lower than the second threshold value.

Each time the value of the authentication security counter is updated, the new value is checked to determine if the first or the second threshold value is reached. If it is determined that one of the threshold values is reached, the SIM 16 performs an action associated with the particular threshold value that is reached. For this authentication security counter 30, the action associated with the first threshold value may be for sending an alert message to the server 12. The action associated with the second threshold value may be for blocking the SIM 16 so that it can no longer be used.

The steps, according to one embodiment, for updating this authentication security counter 30 and sending of a pro-active alert message to the server 12 is next described with the ladder diagram shown in Figure 2. The process starts at Point A in Figure 2 with the mobile equipment 14 sending a command to the SIM 16. At Point B, the operating system 34 in the SIM 16 receives and processes the command. The OS 34 then determines at this Point B if there is a possible breach in security, such as an authentication failure, and if so increments the value of the authentication security counter 30 accordingly. As mentioned above, each time the OS 34 updates the security counter 30, the OS 34 at Point C instructs the agent 36 in the SIM 16 to check the value of the security counter 30. At Point D, the agent 36 determines if the value of the security counter 36 has reached or exceeded the first threshold value specified in the security policy 32. If it is determined that the first threshold value is reached or exceeded, the agent 36 initiates the sending of an alert message to the server 12 at Point E. At this point, the agent 36 builds the alert message that includes, amongst others, the value of the authentication security counter 30 and the serial number or the IMSI of the SIM 16. The agent 36 then sends a "proactive command", via the OS 34, to the mobile equipment 14. The proactive command instructs the mobile equipment 14 to fetch the alert message from the SIM 16. At Point F, the mobile equipment 14 issues a Fetch command. At point G, the agent 36 responds to the Fetch command by packaging the alert message into an over-the-air (OTA) message before sending it to the mobile equipment 14. Finally, at Point H, the mobile equipment 14 packages the OTA message received from the SIM 16 into a short message system (SMS) message and sends it to the server 12.

When the server 12 receives the SMS message at Point J in Figure 2, the server 12 extracts the alert message that is encapsulated in the SMS message. The server 12 may then analyze the received alert message either alone or together with alert messages previously received for this particular SIM 16 to decide if any remedial action is necessary. As described above, the server 12 may also use information in alert messages or otherwise obtained information from other SIMs for deciding if any remedial action is necessary. If it is determined that a remedial action is necessary, the server 12, at Point K, packages an instruction message in an OTA message, and then packages the OTA message in an SMS message which the server 12 sends to the SIM 16. Upon receiving the SMS message, the SIM 16 extracts, interprets and carries out the instruction in the instruction message. Depending on the instruction, the SIM 16 may be blocked, locked, or reset; or the SIM may change the security policy 32 therein, wherein one or both of the threshold values might be adjusted.

According to another embodiment of the invention, there is provided a banking system 40 that includes at least a banking card 42 including one or more security counters 44, one or more card terminals or readers 46 that are able to communicate with the banking card 42, and a server 48 linked to the card reader 46. Again hereafter, for ease of description, the banking system 40 is described as mainly having only one banking card 42 and one card reader 46. The banking card 42 includes an authentication security counter 44. The banking card 42 and the card reader 64 function in much the same manner as the mobile equipment 14 and SIM 16 in the GSM network 2 described above in that they communicate with each other. However, in such a banking system 40, it may not always be possible for a management agent to reside on the banking card 42. In such a case, an agent 50 may reside on the card reader 46 instead.

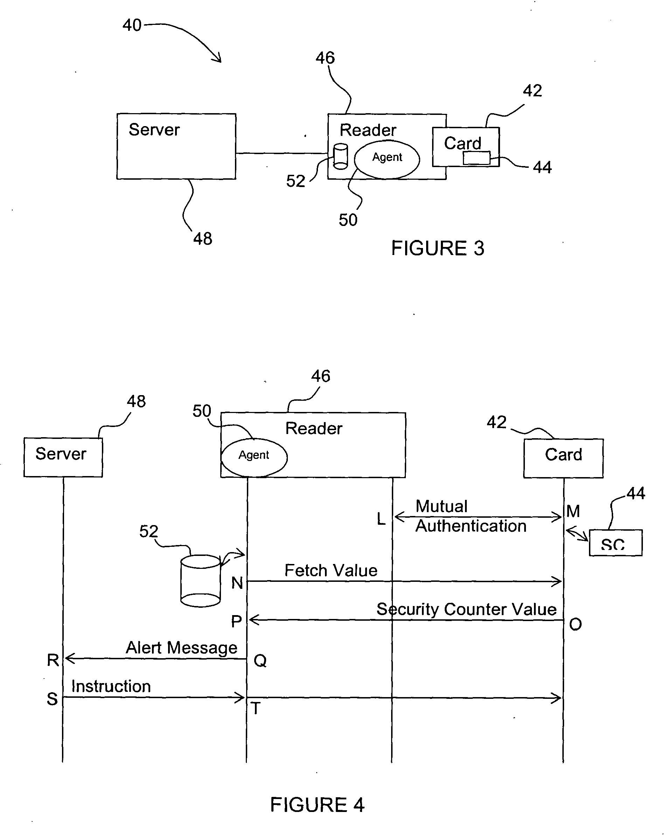

The steps in a process, according to one embodiment, for updating the authentication security counter 44 and sending of a submissive alert message to the server 48 is next described with the ladder diagram shown in Figure 4. The process starts at Point L with the initiation of a transaction at the card reader 46 using the banking card 42, whereby the card reader 46 and the banking card 42 perform mutual authentication known to those skilled in the art. The banking card 42 or more specifically an OS (not shown) therein determines at Point M if there is a possible breach in security, such as an authentication failure, and if so updates the authentication security counter 44 accordingly. Authentication requires for example the card reader 46 to have knowledge of some secret. If the card reader 46 does not possess such a secret, the authentication of the card reader 46 to the banking card 42 would fail and the value of the security counter 44 is updated. Other possible breaches in security include, but are not limited to, data integrity check failure, PIN verification failure, and hardware security sensor activation. After mutual authentication, the agent 50 at point N requests the banking card 42 to provide it with the value of the authentication security counter 44 by sending an appropriate request to the banking card 42. The banking card 42 responds to the request by forwarding the value of the security counter 44 to the card reader 46 at Point O. Alternatively, when the authentication security counter 44 is updated, the banking card 42 may automatically communicate the new value of the security counter 44 to the card reader 46, if that is feasible. At Point P, the card reader 46, or more specifically the agent 50 therein, compares the received value with two threshold values associated the security counter 44 that are specified in a security policy 52. This security policy 52 may be stored in the card reader 46 or the server 48. When stored in the server 48, the card reader 46 may download the security policy 52 as and when required.

If it is determined that the first threshold value is reached or exceeded, the agent 50 sends an alert message to the server 48 at Point Q. The alert message includes, amongst others, the value of the authentication security counter 44 and the serial number of the banking card 42. When the server 48 receives the alert message, the server 48 may then analyze the alert message at Point R in a manner as described above for determining if any remedial action is necessary. If a remedial action is determined to be necessary, the server 48 sends at Point S a corresponding instruction to the card reader 46. Upon receiving the instruction from the server 48 at Point T, the card reader 46 interprets and carries out the instruction from the server 48. Depending on the instruction, the card reader 46 may block, lock, or reset the banking card 42, or it may change the value of the security counter 44 in the banking card 42. The card reader 46 may additionally or alternatively change the security policy 52 stored in the card reader 46, whereby one or both of the threshold values might be adjusted.

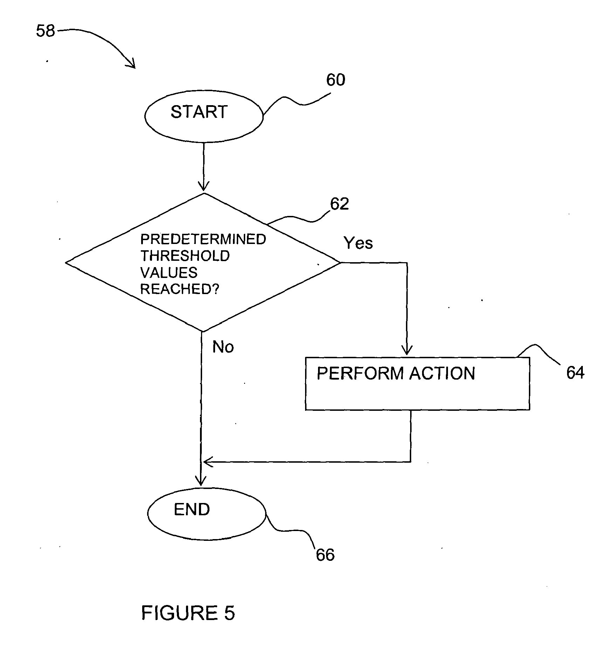

Figure 5 shows a flowchart of a sequence 58 of steps for managing the security counter in a chip card 16, 42 as implemented in the systems 2, 40 described above. The sequence starts in a START step 60 and proceeds to a PREDETERMINED THRESHOLD VALUES REACHED? step 62, wherein it is determined if the value of a security counter 30, 44 has reached or exceeded one of at least two predetermined threshold values. If it is determined in this step 62 that one of the predetermined threshold values of the security counter 30, 40 has been reached or exceeded, the sequence 58 proceeds to a PERFORM ACTION step 64, wherein an action associated with the predetermined threshold value is performed. The sequence 58 next proceeds to an END step 66. However, if it is determined in the PREDETERMINED THRESHOLD VALUES REACHED? step 62 that no predetermined threshold values has been reached, the sequence 58 proceeds directly to the END step 66.

Although the invention is described as implemented in the above-described GSM network 2 wherein the agent 36 resides in the SIM 16, it is not to be construed to be limited as such. For example, the agent 36 may also be implemented in the mobile equipment 14 instead, in a similar manner to that in the card reader 46 in the banking system 40. As another example, the agent 36 may also be implemented in a Universal Integrated Circuit Card (UICC), a DECT authentication module (DAM), and a RUIM when used in a third generation (3G) network, a DECT network and a CDMA network respectively. As a further example, when used in a UMTS 3G system, the alert message may be sent to the server using a channel set up according to the bearer independent protocol (BIP) or any other suitable data channel.

## Claims

1. A method for managing a security counter in a chip card comprising:
checking the value of a security counter;
determining if the value of the security counter has reached or exceeded a first predetermined threshold value; and
performing an action associated with the first predetermined threshold value if it is determined that the first predetermined threshold value of the security counter has been reached or exceeded;
**characterized in that** the method further comprises:
determining if the value of the security counter has reached or exceeded at least one additional predetermined threshold value different from the first predetermined threshold value; and
performing an action associated with each of the additional predetermined threshold values if it is determined that the additional predetermined threshold value of the security counter has been reached or exceeded.

2. A method according to Claim 1, **characterized in that** the action associated with the first threshold value comprises blocking further use of the chip card, and the action associated with one of the additional predetermined thresholds comprises providing an alert message.

3. A method according to Claim 2, **characterized in that** providing an alert message comprises sending an alert message to a server associated with the chip card.

4. A method according to Claim 3, **characterized in that** the alert message is sent automatically to the server without the server having to request for it.

5. A method according to Claim 3 or 4, **characterized in that** the alert message is sent to the server by the chip card or a terminal in communication with the chip card.

6. A method according to Claim 5, **characterized in that** the method further comprises the server instructing the chip card or the terminal to perform a remedial action.

7. A method according to Claim 6, **characterized in that** the remedial action comprises blocking, locking, resetting the chip card or adjusting at least one of the threshold values and the security counter value.

8. A chip card having a security counter therein comprising:
means for checking the value of the security counter;
means for determining if the value of the security counter has reached or exceeded a first predetermined threshold value; and
means for performing an action associated with the first predetermined threshold value if it is determined that the first predetermined threshold value of the security counter has been reached or exceeded;
**characterized in that** the chip card further comprises:
means for determining if the value of the security counter has reached or exceeded at least one additional predetermined threshold value different from the first predetermined threshold value; and
means for performing an action associated with each of the additional predetermined threshold values if it is determined that the additional predetermined threshold value of the security counter has been reached or exceeded.

9. A terminal for communicating with a chip card having a security counter therein comprising:
means for receiving the value of the security counter from the chip card;
means for determining if the value of the security counter has reached or exceeded a first predetermined threshold value; and
means for performing an action associated with the first predetermined value if it is determined that the first predetermined threshold value of the security counter has been reached or exceeded;
**characterized in that** the terminal comprises:
means for determining if the value of the security counter has reached or exceeded at least one additional predetermined threshold value different from the first predetermined threshold value; and
means for performing an action associated with each of the additional predetermined values if it is determined that the additional predetermined threshold value of the security counter has been reached or exceeded.

10. A system for managing a security counter in a chip card comprising:
at least a chip card having a security counter therein;
at least one terminal that is able to communicate with the chip card; and
a server connected to the terminal;
**characterized in that** one of the chip card and the terminal is capable of:
checking the value of the security counter to determine if the value of the security counter has reached one of at least two predetermined threshold values;
sending an alert message to the server if it is determined that a first of the predetermined threshold values of the security counter has been reached or exceeded; and
blocking further use of the chip card if it is determined that a second of the predetermined threshold values of the security counter has been reached.
